# EUROPEAN PATENT APPLICATION

(11) **EP 4 682 750 A1**
(43) Date of publication of application: **21.01.2026**
(21) Application number: 25190023.9
(22) Date of filing: 16.07.2025
(51) Int. Cl.: G06F 21/55, G06N 20/00, H04L 9/40, H04L 67/50

(54) **SYSTEMS AND METHODS FOR ARTIFICIAL INTELLIGENCE (AI) MONITORING OF REMOTE CONNECTION SESSIONS**

(30) Priority: 17.07.2024 US 202463672297 P
(71) Applicant: Dispel, LLC, Austin, TX 78741 (US)
(72) Inventor: SCHMERTZLER, Ethan, Austin, 78741 (US); SCHMERTZLER, Ian, Austin, 78741 (US); BURKE, Benjamin, Austin, 78741 (US); MACRIS, Constantine, Austin, 78741 (US)
(74) Representative: Holzwarth-Rochford, Andreas

(57) **Abstract**

Systems and methods are provided for monitoring a remote connection environment. A screen recording of a user accessing a second computing machine via a first computing machine is captured. Visual elements are extracted from the screen recording. The screen recording and the extracted visual elements are provided to a computer model that has been trained using training screen recordings, training extracted text, and characterizations of behavior. An indication of whether the screen recording and the extracted text are indicative of a particular behavior in which the method is designed to intervene are received from the computer model. An intervention action is executed when the computer model indicates the particular behavior.

## Description

### CROSS-REFERENCE TO RELATED APPLICATIONS

This application claims priority to U.S. Provisional Application No. 63/672,297, filed July 17, 2024, which is incorporated herein by reference in its entirety.

### FIELD

This disclosure is related generally to computer monitoring systems and more particularly to computer monitoring through screen recording in remote connection environments.

### BACKGROUND

Remote connections (e.g., remote desktop connections, VNC, SSH, and/or other proprietary protocols) are utilized to access computers remotely within a computer network. Remote connections may be used in a variety of applications, including remote system control, remote work, troubleshooting, technical support, file transfers, and general collaboration. It may be useful to monitor computers within a remote connection environment to determine when users demonstrate malicious (e.g., unauthorized) behavior. User behavior may compromise network, system, or data safety and security. However, in some environments it may be difficult to directly monitor operations on computers because of a lack of manpower to monitor all sessions, direct access to the remote machine being controlled, or systems and methods capable of detecting unauthorized activity. A monitoring system's only access to the activities on that remote machine may be via information transferred to/from an intermediary machine that is interacting with the remote machine directly or indirectly, which may not include information associated with operations occurring only locally on that remote machine.

### SUMMARY

Systems and methods are provided for monitoring a remote connection environment. A screen recording of a user accessing a second computing machine via a first computing machine is captured. Visual elements are extracted from the screen recording. The screen recording and the extracted visual elements are provided to a computer model that has been trained using training screen recordings, training extracted text, and characterizations of behavior. An indication of whether the screen recording and the extracted text are indicative of a particular behavior in which the method is designed to intervene are received from the computer model. An intervention action is executed when the computer model indicates the particular behavior.

As another example, a method of preventing categorized behavior in a remote connection environment includes capturing a screen recording of a user accessing a second computing machine via a first computing machine. A computer interface is identified in the screen recording. Visual elements are extracted from the screen recording. A true categorized intent value and a false categorized intent value is determined based on the computer interface and the extracted visual elements. The true categorized intent value is compared to a first threshold and the false categorized intent value is compared to a second threshold. An intervention action is executed when the true categorized intent value rises above the first threshold or if the false categorized intent value drops below the second threshold.

As another example, a method of training a remote connection monitoring system includes capturing a plurality of training screen workflows. A computer interface are identified in the training screen workflows. Visual elements are extracted from the training screen workflows. One or more of the plurality of training screen workflows is classified as a particular behavior based on the identified computer interface and the extracted visual elements. The classified training screen workflows are included in a trained remote connection monitoring system.

### DESCRIPTION OF DRAWINGS

Fig. 1 is a diagram depicting an example model (*e.g.,* an artificial intelligence (AI) model) utilizing screen captures in a remote connection environment.
Fig. 2 is a diagram depicting an additional embodiment of an example artificial intelligence (AI) screen recording capture in a remote connection environment.
Fig. 3A is a diagram depicting an example timeline of a screen recording with accompanying visual element capture in a remote connection environment.
Fig. 3B depicts an example screen image including extractable visual elements.
Fig. 4 is a diagram depicting an example flowchart of a method of monitoring a remote connection environment using a trained computer model.
Fig. 5 is a diagram depicting an additional embodiment of an example flowchart of a method of monitoring a remote connection environment.
Fig. 6 illustrates an example flowchart of visual element recognition in a screen image in a remote connection environment.
Fig. 7 illustrates an additional embodiment of an example flowchart of visual element recognition in a screen image in a remote connection environment.
Fig. 8 is a diagram depicting an example flowchart of computer interface identification in a remote connection environment.
Fig. 9 is a diagram depicting an example flowchart of a method of preventing categorized behavior in a remote connection environment.
Fig. 10 is a diagram depicting a suspension of a user's access to a first computer in a remote connection environment.
Fig. 11 is a diagram depicting a system administrator alert in a remote connection environment.
Fig. 12 is a diagram depicting an example flowchart of training a remote connection monitoring system.
Fig. 13 is a diagram depicting an example flowchart of a method of monitoring a remote connection environment.
Fig. 14 is a diagram depicting an additional embodiment of an example flowchart of a method of preventing malicious behavior in a remote connection environment.
Fig. 15 is a diagram depicting an example flowchart of a method of training a remote connection monitoring system.

### DETAILED DESCRIPTION

Remote connection is a technology that allows users to connect to and control a remote computer from a separate computer via a network connection. Remote connections may be used in a variety of applications, including remote system control, remote work, troubleshooting, technical support, file transfers, and general collaboration. In some examples, remote connection users may utilize "jump hosts" to access computers through a plurality of intermediate devices on a network with encrypted payloads. In such an environment, it may be difficult or impossible to monitor a user's activity on a computer directly (*e.g*., through signals or commands sent by the computer to an intermediate server or the remotely accessed computer). Furthermore, operating in a remote connection environment without such encryption may not be feasible or advised. If encryption is in place, monitoring traffic for categorized behavior may not be possible, and monitoring the remote connection feed may be the only alternative. In some environments, users may remotely connect to one endpoint they have authorization to, and then pivot from that endpoint to other devices on the network to which they are not meant to have access.

In such a remote connection environment, a system administrator (*e.g*., an authorized user) may only have access to screen images present on a screen operated by a remote connection user. For example, the system administrator may have access to a virtual desktop infrastructure (VDI) module. VDI can allow multiple virtual desktops to run on a single physical machine. For example, a virtual desktop may be created on a central server, which can be accessed by remote users from any machine within a network. By accessing the VDI module, the system administrator may be able to monitor the screen operated by the remote connection user (*e.g*., monitor to determine malicious behavior). Monitoring the screen or searching for instances of activity may be burdensome and time consuming for a human being. Furthermore, a human being may demonstrate inaccuracies when monitoring the screen operated by the remote connection user.

Systems and methods disclosed herein include training a computer model (*e.g.,* an artificial intelligence (AI) model) to monitor a screen accessed by the remote connection user. For example, the computer model may be trained to detect malicious behavior based on applications, graphical elements, or text identified in a screen recording. Based on the particular behavior detected in the screen recording, the computer model may initiate an intervention action, such as terminating a user's access to a computer or issuing a warning to a system administrator. Monitoring malicious behavior with a computer model may result in increased efficiency, more accurate determinations of categorized behavior, and a capacity to monitor categorized behavior on an increased number of computing machines.

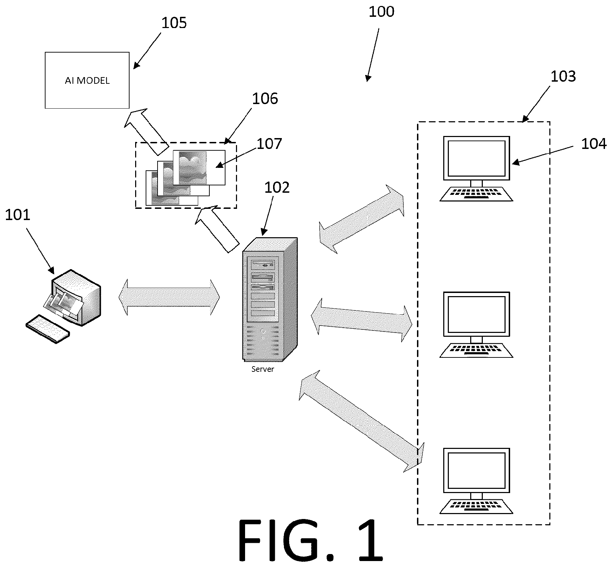

Fig. 1 is a diagram depicting an example model (*e.g.,* an artificial intelligence (AI) model) utilizing screen captures recorded in a remote connection environment. The remote connection environment 100 includes a first computing machine 101. The first computing machine 101 may be accessed by a user. The remote connection environment 100 further includes a second computing machine group 103 including one or more second computing machines 104. The remote connection environment 100 further includes a server 102. The server 102 may be coupled to the first computing machine 101 and the second computing machine group 103. The server 102 may be connected to the first computing machine 101 and the second computing machine group 103, for example, via a computer network. In the example depicted in Fig. 1, the user accesses and controls the second computing machines 104 within the second computing machine group 103 via the first computing machine 101. The user may access and control one or more of the second computing machines 104, for example, through the server 102. Communications between the first computing machine 101, the server 102, and the second computing machines 104 may in some instances utilize encrypted payloads. For example, commands sent from the first computing machine 101 to a second computing machine 104 may be encrypted and simply forwarded to the second computing machine 104 via the server 102. In such an instance, the server 102 monitoring the connection between the first computing machine 101 and the second computing machine 104 may not be able to directly discern the commands from 101 to 104.

The second computing machines 104 may take a variety of forms. In one example, the second computing machines 104 are servers that provide computing services (e.g., web servers) available for access. A user can log into such a server 104 via a first computing machine 101 to configure and control operation of that server 104. In other examples, the second computing machines 104 may be associated with control of physical systems (e.g., a manufacturing machine, an infrastructure system such as a water waste management system or a dam controlling a body of water). The user 101 may control such a remote system 104 by interacting with that system 104 via the intermediary server 102. In some instances, the remote system 104 is a legacy system that may use dated operating systems and software that do not include current information security and other state of the art software.

In one example, the user may send a command from the first computing machine 101 to the server 102, as indicated by the arrow between the first computing machine 101 and the server 102. This command may be a command directly entered into a command window on the first computing machine 101 (*e.g.,* via a keyboard), or it may be a command sent to the server 102 based on an indirect action of the user (e.g., opening or closing an application, interacting with a graphical element on a screen of the first computing machine 101, or moving a computer mouse). The server 102 may process the command and forward the command to one or more second computing machines 104 within the second computing machine group 103. Furthermore, the second computing machines 104 may send information, such as the contents of a monitor screen of the second computing machines 104, to the server 102. The server 102 may relay this information to the first computing machine 101 so that the user can observe the contents of the monitor screen it is controlling. In some instances, while commands from the first computing machine 101 to the second computing machine 104 may be encrypted or otherwise obfuscated from the server 102, the contents of the remote capture of the screen of the second computing machine 104 may be discerned by the server 102 and captured.

The remote connection environment 100 further includes an AI model 105. The AI model 105 may be coupled to the server 102 and may be configured to capture a screen recording 106 from the server 102 or receive captures of screens recorded by the server 102 or other computing device. As described above, the ability to monitor a user's activity within the remote connection environment may be limited to monitoring a screen recording (*e.g*., screen recording 106) of the computer they are operating. The screen recording 106 may include, for example, a plurality of screen images 107 depicted on the first computing machine 101 captured periodically to provide a time series of images 107 associated with a user interacting with a second computing machine 104. For example, screen images 107 within the screen recording 106 may be captured from the server 102 via a virtual desktop infrastructure (VDI) module. In some example embodiments, the screen recording 106 may be captured from the first computing machine 101 rather than or in addition to the server 102, or from the second computing machine group 103. As disclosed herein, the AI model 105 is configured to use the screen recording 106 to prevent malicious behavior in the remote connection environment 100 (*e.g.,* at the first computing machine 101).

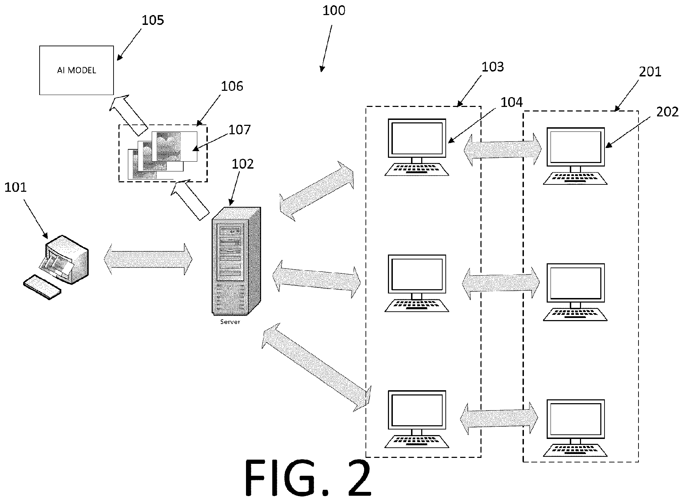

In certain instances, remote control of computing machines may be further indirect than the example of Fig. 1. Fig. 2 is a diagram depicting an additional embodiment of an example artificial intelligence (AI) screen recording capture in a remote connection environment. In the example shown in Fig. 2, the remote connection environment 100 includes a third computing machine group 201 including one or more third computing machines 202. The user may access one or more of the third computing machines 202, for example, via the server 102 and one or more of the second computing machines 104. For example, a command send by the user from the first computing machine 101 to the server 102, the command may be relayed to one or more second computing machines 104 within the second computing machine group 103 and then to one or more third computing machines 202 within the third computing machine group 201. The AI model 105 may capture the screen recording 106 from the server 102, from the first computing machine 101, from one or more of the second computing machines 104, or from one or more of the third computing machines 202. The remaining components of the remote connection environment 100 depicted in Fig. 2 may operate substantially similarly to those depicted in Fig. 1. It should be understood that in some examples, additional layers of computing machine groups (*e.g*., fourth or fifth computing machine groups) may be present within the remote connection environment 100 and that the screen recording 106 may be captured by the AI model 105 from computing machines within any of the additional computing machine groups.

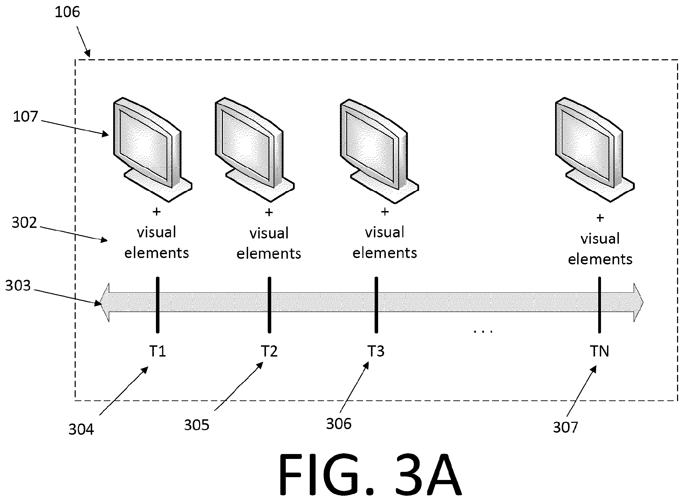

Fig. 3A is a diagram depicting an example timeline of a screen recording with accompanying visual element capture in a remote connection environment. As described above, the screen recording 106 may be captured by the AI model 105 from the server 102 or from another computing machine within the remote connection environment 100. As shown in Fig. 3A, the screen recording 106 includes a plurality of screen images 107 associated with different time points on the timeline 303. Visual elements 302 may be extracted from the screen image 301 associated with each time point on the timeline 303. Visual elements 302 may include text and graphical elements. Text may be present, for example, within a command window. Graphical elements may be present instead of or in addition to text. Graphical elements may include buttons or interactive features (*e.g.,* a graphical slider used to control a chemical level in a controlled system). For example, the screen recording 106 shown in Fig. 3A includes a screen image 107 associated with a first time point T1 304. The screen recording 106 further includes visual elements 302 associated with the first time point T1 304 that is extracted from the screen image 107 associated with the first time point T1 304. Screen images 107 may be captured for N time periods within a screen recording session, and visual elements 302 may be extracted from each screen image 107. The number N of time periods may be a predetermined number, or may be based on an amount of time in which a user accesses a computer (*e.g*., the first computing machine 101).

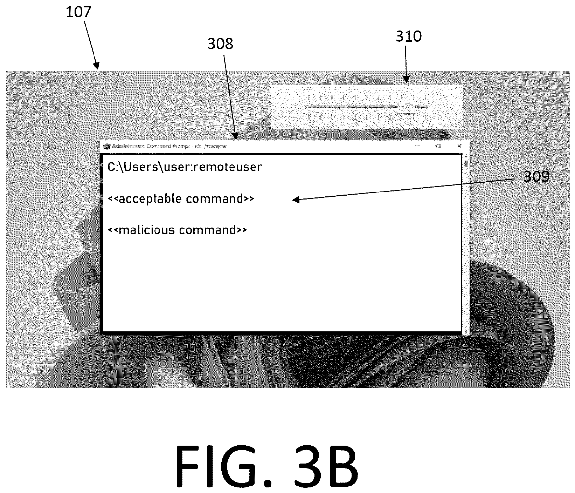

Fig. 3B depicts an example screen image including extractable visual elements. In the example depicted in Fig. 3B, the screen image 107 includes a command window 308 and a graphical element 310. Extractable text 309 may be present in the command window 308 in the form of commands entered by a user. In the example depicted in Fig. 3B, the graphical element 310 is a slider. The slider may be used to control parameters of a system accessed by a user. The extractable text 309 and graphical elements 310 may include, for example, acceptable commands and malicious commands. In addition to the extractable text 309 within the command window 308 and the graphical elements 309, extractable text and graphical elements may be present in other areas within the screen image 107. For example, additional command windows 308 may be open that include additional extractable text 309 and graphical elements 310, or other applications (*e.g*., an internet browser) may be open that include additional extractable text and graphical elements. As described with reference to Fig. 3A, text may be extracted serially for a plurality of time points within a time period.

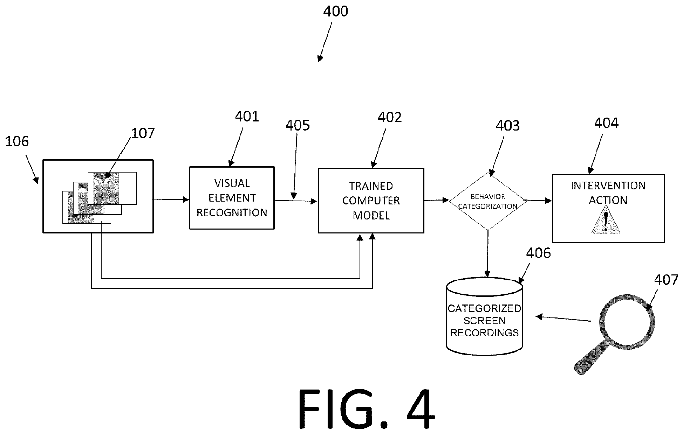

Fig. 4 is a diagram depicting an example flowchart of a method of monitoring a remote connection environment using a trained computer model. The screen recording 106 is processed and one or more of the screen images 107 within the screen recording 106 undergoes visual element recognition at 401. Visual element recognition 401 may include both text recognition and graphical element recognition. Visual element recognition 401 may be applied to the screen recording 106 by, for example, the AI model 105 depicted in Figs. 1 and 2. Alternatively, visual element recognition 401 may be applied to the screen recording 106 prior to being received by the AI model 105, for example by an intermediate computing machine or a separate AI model. The visual element recognition 401 may be performed via optical character recognition (OCR) by an OCR model. The screen recording 106, each screen image 107, and the extracted text and graphical elements 405 from the visual element recognition 401 are received at a trained computer model 402. The trained computer model 402 has been trained using training screen recordings, training extracted text and graphical elements, and indications of whether behavior is malicious or not malicious.

At 403, after the trained computer model 402 receives the extracted text and graphical elements 405, each screen image 107, and the screen recording 106, the screen recording 106 is categorized as being indicative of a particular behavior. For example, the screen recording 106 may be categorized as malicious (*e.g*., unauthorized), ordinary, accidental, abnormal, or any other category. Malicious behavior may include unauthorized actions, such as a user accessing prohibited applications or entering prohibited commands. Actions constituting malicious behavior may vary based on a characterization of a user. For example, a system administrator may have more permissions than a less senior operator within the remote connection environment 100. In some examples, any individual screen image 107 on its own may not constitute malicious behavior, but each screen image 107 taken together, when considered in the context of the other screen images 107, may amount to malicious behavior. For example, a single screen image 107 indicating a user erroneously entering a credential may not amount to malicious behavior, but a group of screen images 107 indicating several erroneously entered credentials may constitute malicious behavior. Behavior may be characterized as ordinary, for example, when the screen recording 106 depicts a user operating within defined parameters. In some examples, this determination at 403 is made by the trained computer model 402.

After the screen recording 106 is categorized at 403 as being indicative of a particular behavior, the categorized screen recordings 106 may be stored in a non-transitory computer-readable data store 406. Categorized screen recordings 106 within the data store 406 may be searchable by an operator (*e.g.,* a system administrator) 407 within the remote connection environment 100. For example, the operator 407 may search for and identify the categorized screen recordings 106 based on the particular behavior with which they are associated. Furthermore, the operator 407 may search for and identify the categorized screen recordings 106 based on the extracted text and graphical elements 405 identified in them.

As shown in Fig. 4, if the screen recording 106 is indicative of a particular category of behavior (*e.g.,* malicious behavior), an intervention action is initiated at 404. The intervention action 404 may include suspending or terminating a user's access to the computing machine they are operating directly or indirectly in the remote connection environment 100 (*e.g.,* by terminating the computing machine's connection to a network). Additionally or alternatively, the intervention action 404 may include sending an alert to a system administrator. The alert may be sent immediately or at a predetermined time (*e.g.,* at the end of the current business day or at the end of the week). Alerts may also be forwarded to a security system (*e.g*., a security operations center (SOC), security information and event management (SIEM), or security orchestration, automation, and response (SOAR)).

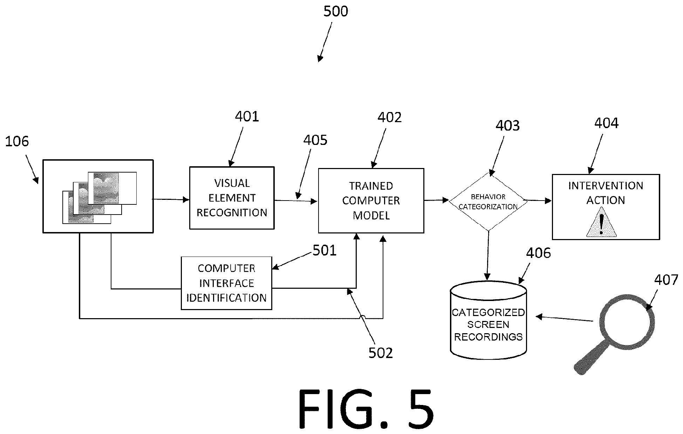

Fig. 5 is a diagram depicting an additional embodiment of an example flowchart of a method of monitoring a remote connection environment. In the example depicted in Fig. 5, one or more computer interfaces within the screen recording 106 are identified at 501. Computer interfaces may include applications, command lines, operating system elements, etc. The computer interface identification 501 may be performed by the AI model 105 or another software entity, such as a second computer model (e.g., a second AI model). For example, the AI model 105 may use image recognition technology to identify particular computer interfaces (*e.g*., a browser, a word processing application, a document manage application, a command window, etc.) within the screen recording 106. After the interfaces are identified at 501, an interface input 502, such as a string including a list of the identified applications, is received by the trained computer model 402. In the example depicted in Fig. 5, the trained computer model 402 receives one or more of the interface input 502, the screen recording 106, and the extracted text and graphical elements 405 identified in the screen recording 106.

The trained computer model 402 may categorize the screen recording 106 as being indicative of a particular behavior based on the screen recording 106, the extracted text and graphical elements 405 identified in the screen recording 106, and the interface input 502 indicating the computer interfaces identified in the screen recording 106 at 501. Combinations of the interface inputs 502, the screen recording 106, and the extracted text and graphical elements 405 may indicate a particular behavior that taken alone would not constitute that behavior. For example, a user may be permitted to open a browser, and thus a browser detected at 501 may not by itself result in the detection of malicious behavior at 403. However, a user may be prohibited from visiting a prohibited website within a browser, and the detection of a browser together with a detection of text 405 corresponding to the prohibited website may amount to malicious behavior. Similarly, a user may be permitted to operate a command window but may be prohibited from entering certain commands in the command window.

The categorized screen recordings 106 may be stored in the non-transitory computer-readable data store 406. As discussed above with reference to Fig. 4, the categorized screen recordings 106 within the data store 406 may be searchable by an operator (*e.g.,* a system administrator) 407 within the remote connection environment 100 based on the particular behavior with which they are associated. Furthermore, the operator 407 may search for and identify the categorized screen recordings 106 based on the extracted text and graphical elements 405 or the computer interfaces identified in them. As discussed above, an intervention action may be initiated at 404 if the screen recording 106 is indicative of a particular category of behavior.

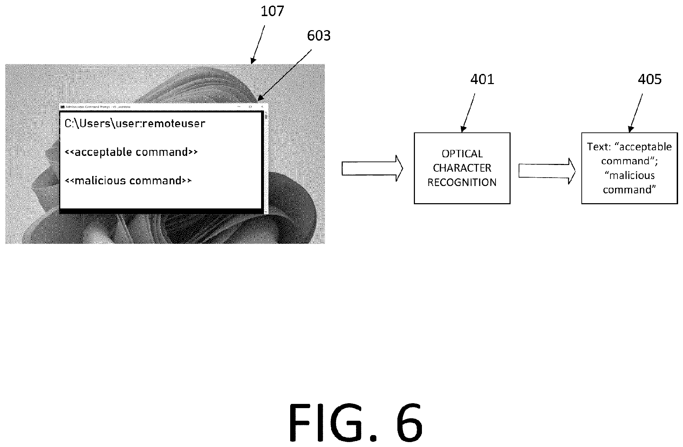

Fig. 6 illustrates an example flowchart of visual element recognition in a screen image in a remote connection environment. In the example shown in Fig. 6, text recognition (*e.g*., optical character recognition (OCR)) is applied to the screen image 107 at 401. OCR may be applied to the screen image 107 by the AI model 105 or by a separate AI model. As discussed above, the screen image 107 may be one of a plurality of screen images 107 within a screen recording 106. The screen image 107 includes an open command window 603 on a monitor of a computer having a Microsoft Windows operating system. Text within the command window 603 includes an acceptable command and a malicious command. Furthermore, text within the command window indicates a particular user that is operating the command window 603. After visual element recognition is applied to the screen image 107 at 401, the extracted text is generated at 405. In the example depicted in Fig. 6, the extracted text and graphical elements include "acceptable command" and "malicious command," which are example acceptable and malicious commands, respectively, for purposes of illustration. As discussed above, the screen recordings 106 may be stored in a non-transitory computer-readable data store after text recognition is applied to each screen image 107 at 401. An operator may search for particular screen recordings 106 based on the specific text identified at 401.

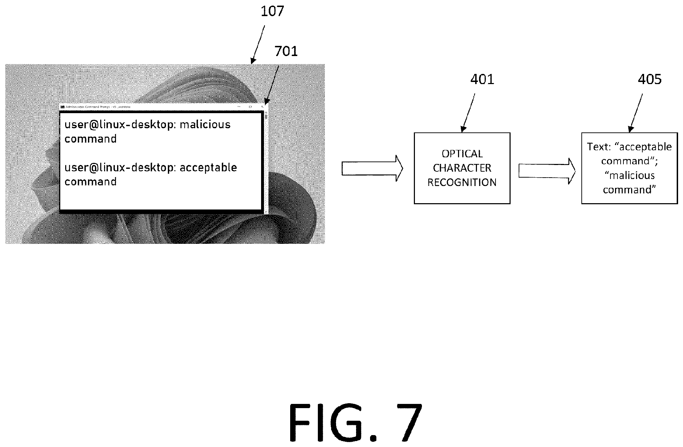

Fig. 7 illustrates an additional embodiment of an example flowchart of visual element recognition in a screen image in a remote connection environment. In the example shown in Fig. 7, the screen image 107 includes an open command window 701 on a monitoring of a computer having a Linux operating system. It should be understood that systems and methods described herein may be capable of preventing certain categories of behavior in remote connection environments using additional operating systems. Furthermore, systems and methods herein may be capable of detecting various visual elements (*e.g*., commands) used in additional operating systems. As shown in Fig. 6, visual element recognition is applied to the screen image 107 at 401 via OCR. Thereafter, the extracted text and graphical elements are generated at 405. The extracted text and graphical elements generated at 405 may include each text string detected within each of the plurality of screen images 107 of the screen recording 106. In the example shown in Fig. 7, the extracted text and graphical elements generated at 405 includes an acceptable command and a malicious command.

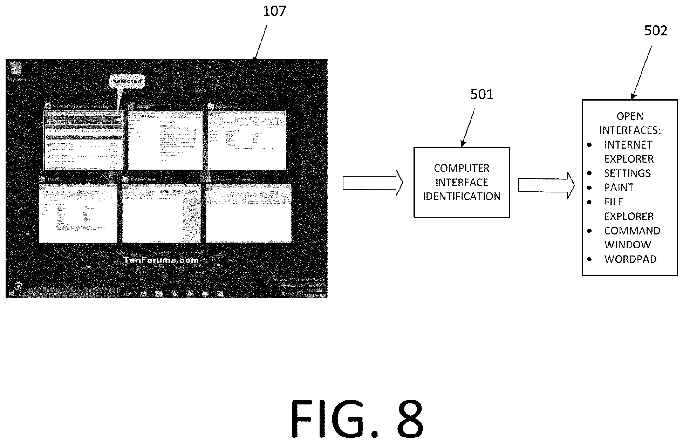

Fig. 8 is a diagram depicting an example flowchart of computer interface identification in a remote connection environment. In the example shown in Fig. 8, the screen image 107 undergoes computer interface identification at 501. Computer interface identification may be performed, for example, by the AI model 105 shown in Figs. 1 and 2. Computer interface identification may use various image recognition technologies. After computer interface identification is applied to the screen image 107 at 501, the interface input 502 is generated. The interface input 502 includes indications of each detected computer interface within the screen image 107. Furthermore, the interface input 502 may include each interface identified with each of the plurality of screen images 107 within the screen recording 106. In the example depicted in Fig. 8, the interface input 502 includes indications that open interfaces within the screen image 107 include Internet Explorer, settings, a paint application, a file explorer application, a command window, and WordPad. As discussed above, an operator can search for open interfaces and may access screen recordings 106 having screen images 107 with the particular interface searched for.

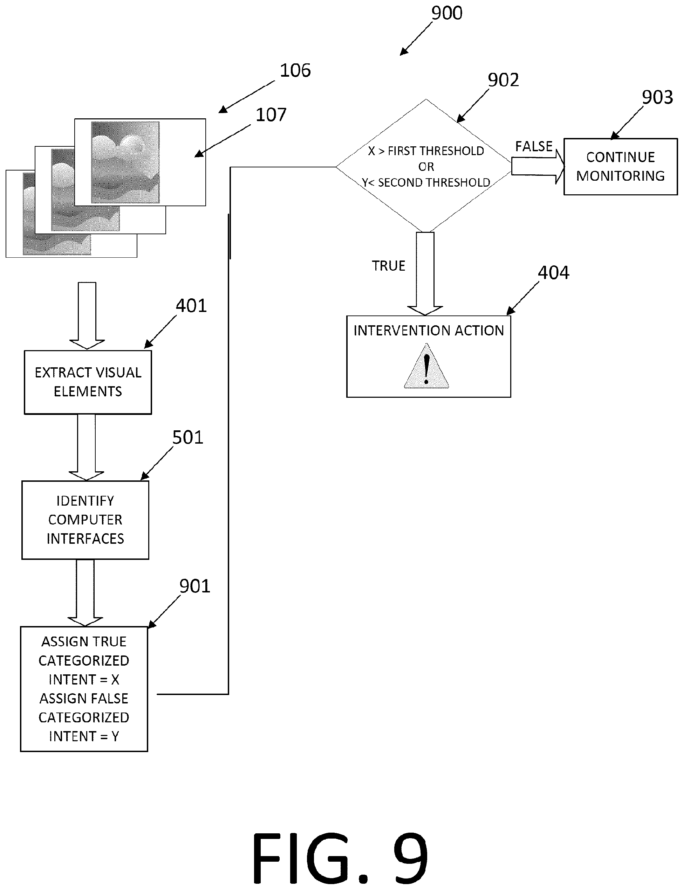

Fig. 9 is a diagram depicting an example flowchart of a method of preventing categorized behavior in a remote connection environment. In the flowchart 900 depicted in Fig. 9, visual elements (*e.g*., text and graphical elements) are extracted from the screen recording 106 at 401. As described above, visual elements may be extracted from each of the screen images 107 within the screen recording 106. Computer interfaces are then identified at 501 for each screen image 107 within the screen recording 106. In some examples, computer interfaces may be identified at 501 before visual elements are extracted at 401, or the interfaces may be identified and visual elements may be extracted simultaneously. Moreover, in some examples only one of visual element extraction 401 and computer interface identification 501 may be performed for the screen recording 106.

After visual elements are extracted at 401 and computer interfaces are identified within the screen recording 106 at 501, a true categorized intent value and a false categorized intent value are assigned to the screen recording at 901 based on the interfaces identified in the screen recording 106 and the text extracted from the screen recording 106. The true categorized intent value may indicate a certainty that the activity identified in the screen recording 106 constitutes a particular category of behavior (*e.g*., malicious behavior). The false categorized intent value may indicate a certainty that the activity identified in the screen recording 106 does not constitute the particular category of behavior. In the example shown in Fig. 9, the variable "X" is assigned to the true categorized intent value and the variable "Y" is assigned to the false categorized intent value. The true categorized intent value and the false categorized intent value may be normalized values between zero (0) and one (1), or they may be values on a predetermined scale, for example, between zero (0) and one hundred (100).

After the true categorized intent value and the false categorized intent value are determined for the screen recording 106, the true categorized intent value is compared to a first threshold and the false categorized intent value is compared to a second threshold at 902. If the true categorized intent value is greater than the first threshold, a determination is made at 902 that a threshold certainty level is exceeded that the screen recording 106 amounts to the particular category of behavior. Furthermore, if the false categorized intent value is less than the second threshold, a determination is made at 902 that a threshold certainty level is not met that the screen recording 106 does not constitute the particular category of behavior.

If either the true categorized intent value is greater than the first threshold or the false categorized intent value is lower than the second threshold, an intervention action is initiated at 404. As discussed above, the intervention action may be a suspension or termination of a user's access to the computer they are accessing in the remote connection environment 100, or it may be a warning message to a system administrator. In some examples, the intervention action may be initiated at 404 when both the true categorized intent value rises above the first threshold and the false categorized intent value falls below the second threshold. In the example shown in Fig. 9, if the true categorized intent value is less than or equal to the first threshold and the false categorized intent value is greater than or equal to the second threshold, the screen recording is continued to be monitored at 903. A similar method as that depicted in Fig. 9 may be used to prevent any category of behavior, for example, abnormal behavior.

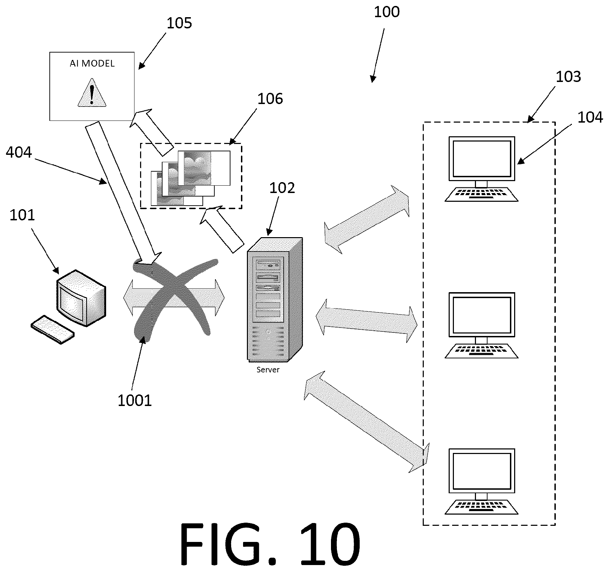

Fig. 10 is a diagram depicting suspension of a user's access to a first computer in a remote connection environment. In the example depicted in Fig. 10, the remote connection environment 100 may be similar to the remote connection environment 100 depicted in Fig. 1. The AI model 105 determines that the screen recording 106 indicates a particular behavior (*e.g*., malicious behavior) and initiates an intervention action. As described above, this determination may be made based on text or interfaces identified within the screen recording 106. After the AI model 105 determines that the screen recording 106 indicates the particular behavior, the first computing machine's 101 access to the server 102 is disrupted, as indicated by the red 'X' 1001 in Fig. 10. This disruption may by caused by the AI model 105 or may be caused by a system administrator or by another computer coupled to the AI model 105. In some examples, the intervention action may include terminating the ability to remotely access a computer (*e.g.*, the second computing machine 104) from another computer (*e.g.*, the first computing machine 101) being used by a user.

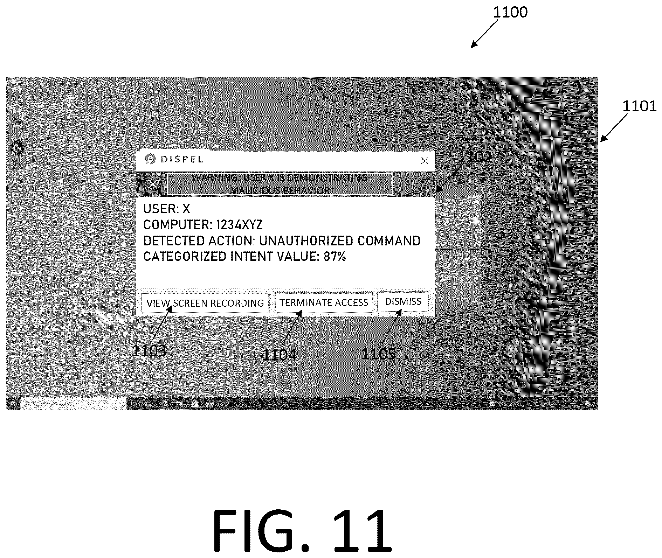

Fig. 11 is a diagram depicting a system administrator alert in a remote connection environment. As described above, an intervention action may include issuing a system administrator alert 1102 to a system administrator when certain behavior is detected within a screen recording 106. In the example shown in Fig. 11, the system administrator alert 1102 is a window including information regarding the nature of the behavior and other data concerning the event that triggered the system administrator alert 1102. For example, the system administrator alert 1102 in Fig. 11 includes the text "WARNING: USER X IS DEMONSTRATING MALICIOUS BEHAVIOR." It will be understood that alerts containing more specific or different messages may be used within the system administrator alert 1102.

The system administrator alert 1102 further includes an indication of a user that was responsible for the detected behavior (*e.g*., the user operating the computing machine from which the screen recording was obtained). The user may be determined, for example, based on credentials used to sign into the computing machine or from identified text within the screen recording. Furthermore, the system administrator alert 1102 includes an indication of the computer from which the screen recording was obtained. The system administrator alert 1102 also includes the detected action that constituted malicious behavior. The detected action may be determined, for example, by the AI model 105. In the example shown in Fig. 11, the detected action is an unauthorized command. The system administrator alert 1102 further shows a categorized intent value. The categorized intent value may be determined based on the true categorized intent value and the false categorized intent value discussed with reference to Fig. 9. In some examples, the true categorized intent value and the false categorized intent value may be shown on the system administrator alert 1102.

As shown in Fig. 11, the system administrator alert 1102 includes a first button 1103, a second button 1104, and a third button 1105. The first button 1103 includes an option to view the screen recording that triggered the system administrator alert 1102. When the system administrator selects this option 1103, a separate window may open which plays the screen recording to the system administrator. The entire screen recording may be played, or only the portion of the screen recording that triggered the system administrator alert 1102. The second button 1104 includes an option to terminate an access to a computer of the user responsible for the detected behavior. This termination of access may be similar, for example, to the access termination described in the description of Fig. 10.

The system administrator may also have the ability to terminate an access of the user based on a screen recording 106 the system administrator accessed based on their own search. For example, the system administrator may search a data store (*e.g.,* data store 406) for open interfaces (*e.g*., applications) and may access screen recordings 106 containing the searched-for interfaces. The system administrator may have the ability to terminate the access of the user responsible for the open interfaces after viewing the screen recording 106, or after simply identifying the screen recording 106 within search results. The third button 1105 includes an option to dismiss the system administrator alert 1102. The system administrator may elect to dismiss the system administrator alert 1102 when, for example, he or she reviews the screen recording by selecting 1103 and determines that the user's actions do not warrant terminating the user's access.

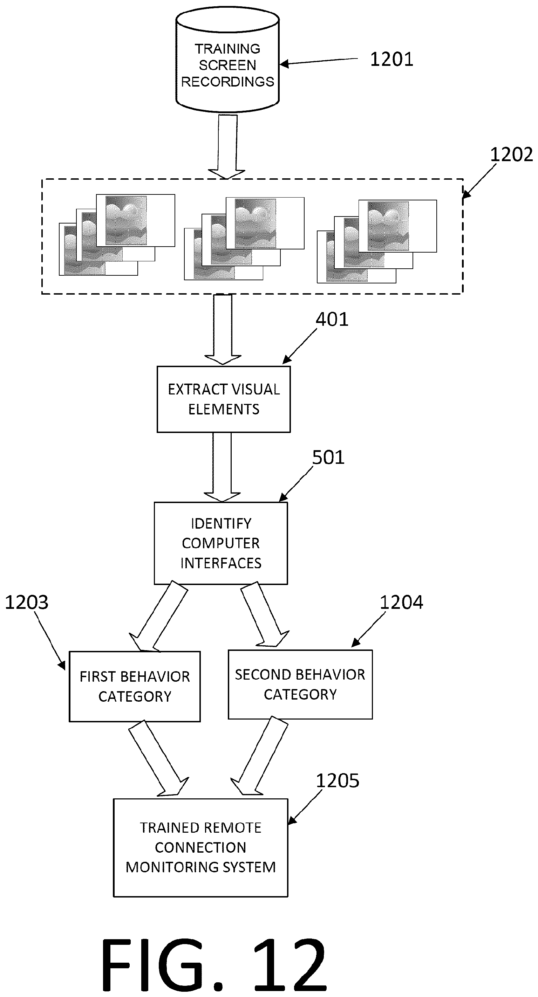

Fig. 12 is a diagram depicting an example flowchart of training a remote connection monitoring system. In the example shown in Fig. 12, training screen recordings 1202 are stored in a non-transitory computer-readable data store 1201. The training screen recordings 1202 are extracted from the data store 1201. At 401, visual elements are extracted from each of the training screen recordings 1202 (*e.g.,* from each screen image within each training screen recording 1202). As described above, OCR or other text recognition technology may be utilized to extract text from the training screen recordings 1202. Computer interfaces are then identified within the training screen recordings 1202 at 501. Image recognition technology may be used to identify the interfaces within the training screen recordings 1202. Text may be extracted at 401 and interfaces may be identified at 501 by, for example, an AI model (*e.g.,* AI model 105).

Based on the interfaces identified at 501 and the text extracted at 401 for each training screen recording 1202, each training screen recording 1202 is classified as one or more of a plurality of behavior categories. In the example shown in Fig. 12, the plurality of behavior categories includes a first behavior category 1203 and a second behavior category 1204. This classification may be performed by an AI model, or may be performed by humans who are capable of categorizing behavior based on the training screen recordings 1202. Based on the classification of each training screen recording 1202 as one or more of a plurality of behavior categories 1203, 1204, an identification (*e.g*., by metadata) of each designated behavior category may be applied to the respective training screen recordings 1202.

The classified training screen recordings 1202 are then received at a trained remote connection monitoring system 1205. The trained remote connection monitoring system may be, for example, the trained computer model 402 depicted in Figs. 4 and 5. In some examples, the method depicted in Fig. 12 is applied to screen recordings (*e.g*., the screen recordings 106) in real time such that the computer model used to evaluate the screen recordings for categorized behavior is continually trained with additional data. Furthermore, the trained remote connection monitoring system 1205 may be continually refined by a system administrator. For example, a system administrator may confirm or correct the behavior categorizations applied to the training screen recordings. This may assist in reducing "false positives" and "false negatives" when the trained remote connection monitoring system 1205 is applied to live screen recordings.

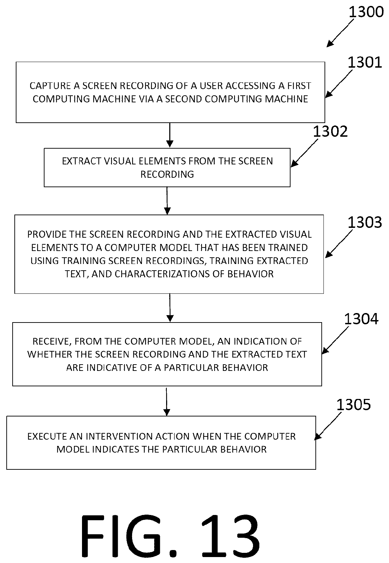

Fig. 13 is a diagram depicting an example flowchart of a method of monitoring a remote connection environment. The method 1300 includes a first step 1301 of capturing a screen recording of a user accessing a first computing machine via a second computing machine. At 1302, visual elements are extracted from the screen recording. At 1303, the screen recording and extracted visual elements are provided to a computer model that has been trained using training screen recordings, training extracted text and graphical elements, and characterizations of behavior. At 1304, an indication of whether the screen recording and the extracted visual elements are indicative of a particular behavior is received from the computer model. At 1305, an intervention action is executed when the computer model indicates the particular behavior.

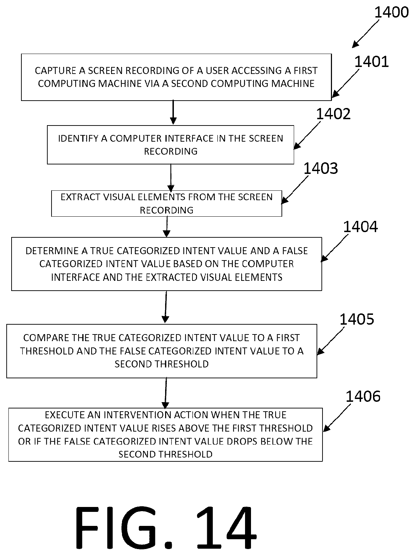

Fig. 14 is a diagram depicting an additional embodiment of an example flowchart of a method of preventing malicious behavior in a remote connection environment. The method 1400 includes a step 1401 of capturing a screen recording of a user accessing a first computing machine via a second computing machine. At 1402, a computer interface in the screen recording is identified. At 1403, visual elements are extracted from the screen recording. At 1404, a true categorized intent and a false categorized intent are determined based on the computer interface and the extracted visual elements. At 1405, the true categorized intent value is compared to a first threshold and the false categorized intent value is compared to a second threshold. At 1406, an intervention action is executed when the true categorized intent value rises above the first threshold of the false categorized intent value falls below the second threshold.

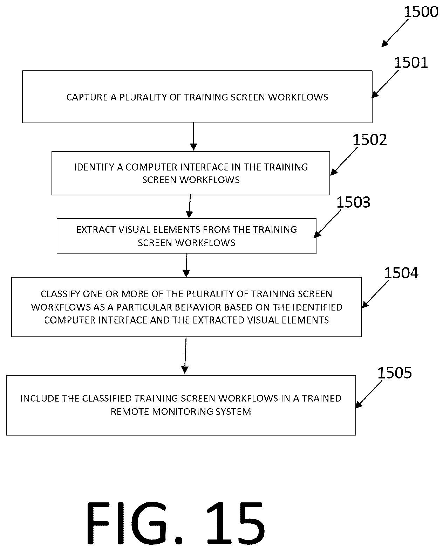

Fig. 15 is a diagram depicting an example flowchart of a method of training a remote connection monitoring system. The method 1500 includes a first step 1501 of capturing a plurality of training screen workflows. At 1502, a computer interface in the training screen workflows is identified. At 1503, visual elements are extracted from the training screen workflows. At 1504, one or more of the plurality of training screen workflows is classified as a particular behavior based on the identified application and the extracted visual elements. At 1505, the classified training screen workflows are included in a trained remote connection monitoring system.

The methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein and may be provided in any suitable language such as C, C++, JAVA, for example, or any other suitable programming language. Other implementations may also be used, however, such as firmware or even appropriately designed hardware configured to carry out the methods and systems described herein.

The systems' and methods' data (*e.g*., associations, mappings, data input, data output, intermediate data results, final data results, etc.) may be stored and implemented in one or more different types of computer-implemented data stores, such as different types of storage devices and programming constructs (*e.g*., RAM, ROM, Flash memory, flat files, databases, programming data structures, programming variables, IF-THEN (or similar type) statement constructs, etc.). It is noted that data structures describe formats for use in organizing and storing data in databases, programs, memory, or other computer-readable media for use by a computer program.

The computer components, software modules, functions, data stores and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an objectoriented paradigm), or as an applet, or in a computer script language, or as another type of computer code. The software components and/or functionality may be located on a single computer or distributed across multiple computers depending upon the situation at hand.

While the disclosure has been described in detail and with reference to specific embodiments thereof, it will be apparent to one skilled in the art that various changes and modifications can be made therein without departing from the spirit and scope of the embodiments. Thus, it is intended that the present disclosure cover the modifications and variations of this disclosure provided they come within the scope of the appended claims and their equivalents.

## Claims

1. A method of monitoring a remote connection environment, the method comprising:
capturing a screen recording of a user accessing a second computing machine via a first computing machine;
extracting visual elements from the screen recording;
providing the screen recording and the extracted visual elements to a computer model that has been trained using training screen recordings, training extracted text, and characterizations of behavior;
receiving, from the computer model, an indication of whether the screen recording and the extracted visual elements are indicative of a particular behavior in which the method is designed to intervene; and
executing an intervention action when the computer model indicates the particular behavior.

2. The method of claim 1, further comprising identifying computer interfaces in the screen recording, wherein the indication is based on one or both of the computer interfaces and extracted visual elements, wherein the method optionally further comprises storing the screen recording in a non-transitory computer-readable data store, the non-transitory computer-readable data store searchable based on the extracted visual elements or the identified computer interfaces in the screen recording.

3. The method of claim 1 or 2, wherein the screen recording
(i) includes a plurality of screen images, and/or
(ii) is captured at a server or endpoint within the remote connection environment.

4. The method of one of the preceding claims, wherein the visual elements
(i) include text, and/or
(ii) include graphical elements.

5. The method of one of the preceding claims, wherein the intervention action includes
(i) ending the access of the user to the second computing machine and/or
(ii) sending an alert to a system administrator.

6. A method of preventing categorized behavior in a remote connection environment, the method comprising:
capturing a screen recording of a user accessing a second computing machine via a first computing machine;
identifying a computer interface in the screen recording;
extracting visual elements from the screen recording;
determining a true categorized intent value and a false categorized intent value based on the computer interface and the extracted visual elements;
comparing the true categorized intent value to a first threshold and the false categorized intent value to a second threshold; and
executing an intervention action when the true categorized intent value rises above the first threshold or if the false categorized intent value drops below the second threshold.

7. The method of claim 6, wherein the intervention action includes (i) ending the access of the user to the second computing machine and/or (ii) sending an alert to a system administrator.

8. The method of claim 6 or 7, wherein the alert is sent a predetermined time after the true categorized intent value rises above the first threshold or the false categorized intent value drops below the second threshold.

9. The method of one of the claims 6 to 8, wherein determining the true categorized intent value and the false categorized intent value includes comparing the screen recording to a plurality of classified screen recordings.

10. A method of training a remote connection monitoring system, the method comprising:
capturing a plurality of training screen workflows;
identifying a computer interface in the training screen workflows;
extracting visual elements from the training screen workflows;
classifying one or more of the plurality of training screen workflows as a particular behavior based on the identified computer interface and the extracted visual elements; and
including the classified training screen workflows in a trained remote connection monitoring system.

11. The method of claim 10, wherein each of the plurality of training screen workflows include a plurality of training screen images.

12. The method of claim 10 or 11, further comprising confirming the classification of the one or more of the plurality of training screen workflows as the particular behavior, the confirmation performed by a system administrator.

13. The method of one of the claims 10 to 12, wherein the particular behavior is malicious or unauthorized behavior.

14. The method of one of the claims 10 to 13, wherein the visual elements include text.

15. The method of one of the claims 10 to 14, wherein the visual elements include graphical elements.
